# EUROPEAN PATENT APPLICATION

(11) **EP 4 513 611 A1**
(43) Date of publication of application: **26.02.2025**
(21) Application number: 23890337.1
(22) Date of filing: 29.08.2023
(51) Int. Cl.: H01M 10/0585, H01M 10/0525, H01M 4/13, H01M 50/586, H01M 50/59

(54) **BATTERY CELL AND BATTERY**

(30) Priority: 18.11.2022 CN 202223067153 U; 18.11.2022 CN 202223067161 U
(71) Applicant: Zhuhai CosMX Battery Co., Ltd., Zhuhai, Guangdong 519180 (CN)
(72) Inventor: WANG, Yongwang, Zhuhai, Guangdong 519180 (CN); XU, Desheng, Zhuhai, Guangdong 519180 (CN)
(74) Representative: Murgitroyd & Company
(86) International application number: PCT/CN2023/115470
(87) International publication number: WO 2024/103899

(57) **Abstract**

The present application provides a battery cell and a battery, and the battery cell includes: a first stacked cell and a second stacked cell that are stacked, the first stacked cell and the second stacked cell both include a plurality of first electrode plates and a plurality of second electrode plates that are alternately stacked, and on a plane parallel to the plurality of first electrode plates, a projection of the first stacked cell is within a range of a proj ection of the second stacked cell on the plane. The first stacked cell and the second stacked cell of different sizes are arranged in a stacked manner, so that the battery cell can be flexibly adapted to battery compartment structures of difference sizes, and a manufacturing process is simple and a mass production is easy to implement.

## Description

### TECHNICAL FIELD

The present application relates to the field of battery technologies, and in particular, to a battery cell and a battery.

### BACKGROUND

With the development of economy and the progress of science and technology, intelligent products have been deep into many aspects of people's lives. In order to improve the user experience, the intelligent products are increasingly lighter and miniaturized, and a rechargeable lithium-ion button battery has been gradually applied to various fields of people's daily life, such as wearable products, computer products, and medical products.

Battery compartment structures required for different terminal products are different, and therefore, how to produce lithium batteries in batches is very critical.

### SUMMARY

In order to solve the above-mentioned technical problems, the present application is provided. Embodiments of the present application provide a battery cell and a battery.

In a first aspect, embodiments of the present application provide a battery cell, including: a first stacked cell and a second stacked cell that are stacked. The first stacked cell and the second stacked cell both include a plurality of first electrode plates and a plurality of second electrode plates that are alternately stacked, and on a plane parallel to the plurality of first electrode plates, a projection of the first stacked cell is within a range of a projection of the second stacked cell.

With reference to the first aspect, in some implementations of the first aspect, the first stacked cell and the second stacked cell both include a plurality of first tabs and a plurality of second tabs. On the plane parallel to the plurality of first electrode plates, there is an overlapping region between a projection of the plurality of first tabs of the first stacked cell and a projection of the plurality of first tabs of the second stacked cell, and/or, on the plane parallel to the plurality of first electrode plates, there is also an overlapping region between a projection of the plurality of second tabs of the first stacked cell and a projection of the plurality of second tabs of the second stacked cell.

With reference to the first aspect, in some implementations of the first aspect, the battery cell further includes: a housing in which the first stacked cell and the second stacked cell are enclosed.

With reference to the first aspect, in some implementations of the first aspect, each second electrode plate of the plurality of second electrode plates includes a second current collector and a second polar active layer coated on a surface of the second current collector; the second current collector of the second electrode plate, close to the first stacked cell, of the second stacked cell includes a first portion, opposite to the first electrode plate, close to the second stacked cell, of the first stacked cell, and a second portion connected to the first portion; the second polar active layer includes a portion formed on the first portion; and a protective layer is provided on a surface, close to the first stacked cell, of the second portion.

With reference to the first aspect, in some implementations of the first aspect, the protective layer includes a blue adhesive and/or a green adhesive.

With reference to the first aspect, in some implementations of the first aspect, the second polar active layer further includes a portion between the second portion and the protective layer.

With reference to the first aspect, in some implementations of the first aspect, each first electrode plate of the plurality of first electrode plates includes a first current collector and a first polar active layer coated on a surface of the first current collector, and the first current collector of the first electrode plate, close to the second stacked cell, of the first stacked cell is configured to be opposite to the first current collector of the first electrode plate, close to the first stacked cell, of the second stacked cell.

With reference to the first aspect, in some implementations of the first aspect, the first current collector of the first electrode plate, close to the second stacked cell, of the first stacked cell and the first current collector of the first electrode plate, close to the first stacked cell, of the second stacked cell are bonded into a whole by any one of a hot melt adhesive, a polypropylene adhesive and a double-sided adhesive.

With reference to the first aspect, in some implementations of the first aspect, each first electrode plate of the plurality of first electrode plates includes a first current collector and a first polar active layer coated on a surface of the first current collector, each second electrode plate of the plurality of second electrode plates includes a second current collector and a second polar active layer coated on a surface of the second current collector, and the first polar active layer of the first electrode plate, close to the second stacked cell, of the first stacked cell is configured to be opposite to the second polar active layer of the second electrode plate, close to the first stacked cell, of the second stacked cell.

With reference to the first aspect, in some implementations of the first aspect, the battery cell further includes: a fifth separator bonded to the first electrode plate, close to the second stacked cell, of the first stacked cell. The fifth separator and a second polar active layer, close to the first stacked cell, of the second stacked cell are bonded into a whole.

With reference to the first aspect, in some implementations of the first aspect, the first electrode plate, far away from the second stacked cell, of the first stacked cell includes a first current collector and a first polar active layer coated on a surface, close to the second stacked cell, of the first current collector.

With reference to the first aspect, in some implementations of the first aspect, the battery cell further includes: a first separator bonded to the first polar active layer coated on the surface, close to the second stacked cell, of the first current collector.

With reference to the first aspect, in some implementations of the first aspect, the first electrode plate, far away from the first stacked cell, of the second stacked cell includes a first current collector and a first polar active layer coated on a surface, close to the first stacked cell, of the first current collector.

With reference to the first aspect, in some implementations of the first aspect, the battery cell further includes: a second separator bonded to the first polar active layer coated on the surface, close to the first stacked cell, of the first current collector.

With reference to the first aspect, in some implementations of the first aspect, on the plane parallel to the plurality of first electrode plates, a projection of at least one side of the first stacked cell coincides with a projection of at least one side of the second stacked cell.

With reference to the first aspect, in some implementations of the first aspect, the first stacked cell and the second stacked cell both include a plurality of first tabs and a plurality of second tabs, each first electrode plate of the plurality of first electrode plates includes a first current collector, and an insulating layer is provided in a region at an end, close to a corresponding first tab, of the first current collector.

With reference to the first aspect, in some implementations of the first aspect, the battery cell further includes: a plurality of composite cells. Each composite cell of the plurality of composite cells includes a third separator, the first electrode plate, a fourth separator and the second electrode plate that stacked in sequence.

With reference to the first aspect, in some implementations of the first aspect, a portion, extending beyond the first electrode plate, of the third separator is bonded to a portion, extending beyond the first electrode plate, of the fourth separator.

With reference to the first aspect, in some implementations of the first aspect, the first electrode plates are positive electrode plates; and the second electrode plates are negative electrode plates.

In a second aspect, embodiments of the present application provide a battery, and the battery includes the battery cell mentioned in any one of the above-mentioned implementations and a housing including the battery cell.

With reference to the second aspect, in some implementations of the second aspect, the first electrode plate, far away from the second stacked cell, of the first stacked cell includes a first current collector, and the first current collector is configured to be opposite to the housing, and/or the first electrode plate, far away from the first stacked cell, of the second stacked cell includes a first current collector, and the first current collector is configured to be opposite to the housing.

The present application provides the battery cell, including: the first stacked cell and the second stacked cell that are stacked. The first stacked cell and the second stacked cell both include the plurality of first electrode plates and the plurality of second electrode plates that are alternately stacked, and on the plane parallel to the plurality of first electrode plates, the projection of the first stacked cell is within the range of the projection of the second stacked cell. In the present application, the first stacked cell and the second stacked cell of different sizes are arranged in a stacked manner, so that on the plane, the projection of the first stacked cell is within the range of the projection of the second stacked cell, and thus the first stacked cell and the second stacked cell can be flexibly adapted to battery compartment structures of different sizes, and a manufacturing process is simple and a mass production is easy to implement.

### BRIEF DESCRIPTION OF THE DRAWINGS

The above and other objects, features and advantages of the present application may become more apparent from the more detailed description of embodiments of the present application with reference to the accompanying drawings. The accompanying drawings are used to provide a further understanding of the embodiments of the present application, and constitute a part of the specification, which are used for explaining the present application with the embodiments of the present application, and do not constitute a limitation on the present application. In the accompanying drawings, the same reference numerals generally refer to the same parts or steps.
FIG. 1a is a schematic structural diagram of a battery cell provided by an exemplary embodiment of the present application.
FIG. 1b is a schematic structural diagram of the battery cell shown in FIG. 1a in the N direction.
FIG. 2 is a schematic structural diagram of a battery cell provided by another exemplary embodiment of the present application.
FIG. 3 is a schematic structural diagram of a first electrode plate, far away from a second stacked cell, of a first stacked cell provided by an exemplary embodiment of the present application.
FIG. 4 is a schematic structural diagram of a first electrode plate, far away from a first stacked cell, of a second stacked cell provided by an exemplary embodiment of the present application.
FIG. 5 is a schematic structural diagram of a battery cell provided by another exemplary embodiment of the present application.
FIG. 6 is a schematic structural diagram of a battery cell provided by another exemplary embodiment of the present application.
FIG. 7 is a schematic structural diagram of an insulating layer provided by an exemplary embodiment of the present application.
FIG. 8 is a schematic structural diagram of a composite cell provided by an exemplary embodiment of the present application.
FIG. 9 is a schematic structural diagram of a battery provided by an exemplary embodiment of the present application.
FIG. 10a is a schematic structural diagram of a battery cell provided by an exemplary embodiment of the present application.
FIG. 10b is a schematic structural diagram of the battery cell shown in FIG. 10a in the N direction.
FIG. 10c is a schematic structural diagram of a battery cell provided by another exemplary embodiment of the present application.

The reference numerals include: battery cell 100, 100'; first stacked cell 110; second stacked cell 120; first electrode plate A100; second electrode plate B100; first tab A; second tab B; first current collector A110; first polar active layer A120; second current collector B110; second polar active layer B120; first portion B111; second portion B112; first separator 130; second separator 140; uncoated region W; composite cell 150; third separator 151; fourth separator 152; fifth separator 160; battery 10; housing 200; thickness h1 of first stacked cell; thickness h2 of second stacked cell; length difference denoted as a; and width difference denoted as b.

### DETAILED DESCRIPTION OF THE EMBODIMENTS

Technical solutions in the embodiments of the present application may be described clearly and completely below with reference to the accompanying drawings of the embodiments of the present application. Apparently, the described embodiments are only a part of the embodiments of the present application, but not all the embodiments of the present application. All other embodiments obtained by a person of ordinary skill in the art based on the embodiments of the present application without creative work fall within the protection scope of the present application.

In addition, in order to better explain the present application, numerous specific details are given in the following specific implementations. It should be understood by a person skilled in the art that the present application may also be implemented without some specific details. In some examples, methods, means, elements, and circuits well known to a person skilled in the art are not described in detail to highlight main ideas of the present application.

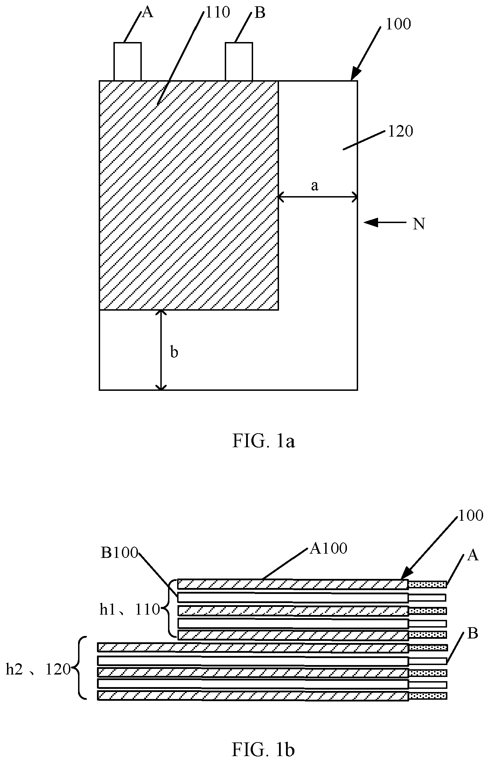

A battery cell provided by some embodiments of the present application is described below with reference to FIGS. 1 to 8.

FIG. 1a is a schematic structural diagram of a battery cell provided by an exemplary embodiment of the present application. FIG. 1b is a schematic structural diagram of the battery cell shown in FIG. 1a in the N direction. As shown in FIGS. 1a and 1b, a battery cell 100 provided by the embodiments of the present application includes: a first stacked cell 110 and a second stacked cell 120 that are stacked. The first stacked cell 110 and the second stacked cell 120 both include a plurality of first electrode plates A100 and a plurality of second electrode plates B100 that are alternately stacked. On a plane parallel to the first electrode plates A100, a projection of the first stacked cell 110 is within a range of a projection of the second stacked cell 120. The first stacked cell 110 and the second stacked cell 120 both include a plurality of first tabs A and a plurality of second tabs B, and on the plane parallel to the first electrode plates A100, there is an overlapping region between a projection of the plurality of first tabs A of the first stacked cell 110 and a projection of the plurality of first tabs A of the second stacked cell 120, and there is also an overlapping region between a projection of the plurality of second tabs B of the first stacked cell 110 and a projection of the plurality of second tabs B of the second stacked cell 120. Planar shapes of the first stacked cell 110, the second stacked cell 120, the first tabs A, and the second tabs B may be rectangles.

In some embodiments, the first electrode plates A100 are positive electrode plates; and the second electrode plates B100 are negative electrode plates. The first tabs A refer to positive electrode tabs, and the second tabs refer to negative electrode tabs. The positive electrode plates correspond to the positive electrode tabs, and the negative electrode plates correspond to the negative electrode tabs.

In some embodiments, on the plane parallel to the first electrode plates A100, the projection of the first stacked cell 110 is within the range of the projection of the second stacked cell 120, i.e., a size of the first stacked cell 110 is different from a size of the second stacked cell 120, so that the first stacked cell 110 and the second stacked cell 120 can be flexibly adapted to battery compartment structures of different sizes, and the first stacked cell 110 and the second stacked cell 120 may be designed to be of different shapes according to different demands, so that the first stacked cell 110 and the second stacked cell 120 can be flexibly adapted to battery compartment structures of different shapes, which is beneficial to the development of smart products in aspects of portability and miniaturization. Besides, a manufacturing process is simple, and a mass production is easy to implement.

In some embodiments, a difference between a thickness h1 of the first stacked cell 110 and a thickness h2 of the second stacked cell 120 is greater than or equal to 0.3 mm, a length difference, denoted as a, between the first stacked cell 110 and the second stacked cell 120 is greater than or equal to 0 mm, and a width difference, denoted as b, between the first stacked cell 110 and the second stacked cell 120 is greater than or equal to 0 mm, but the length difference, denoted as a, and the width difference, denoted as b, cannot both be equal to 0 mm.

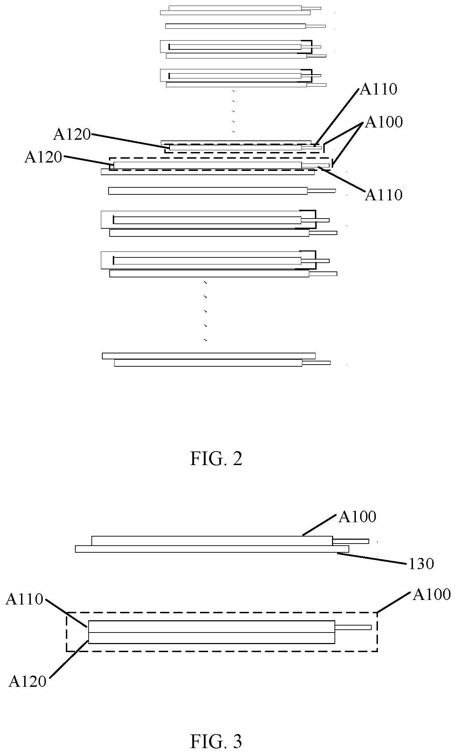

FIG. 2 is a schematic structural diagram of a battery cell provided by another exemplary embodiment of the present application. As shown in FIG. 2, in the battery cell 100 provided by the embodiments of the present application, the first electrode plate A100 includes a first current collector A110 and a first polar active layer A120 coated on a surface of the first current collector A110, and the first current collector A110 of the first electrode plate A100, close to the second stacked cell 120, of the first stacked cell 110 is configured to be opposite to the first current collector A110 of the first electrode plate A100, close to the first stacked cell 110, of the second stacked cell 120.

In some embodiments, to be opposite to refers to that the first current collector A110 of the first electrode plate A100, close to the second stacked cell 120, of the first stacked cell 110 is configured to be adjacent to the first current collector A110 of the first electrode plate A100, close to the first stacked cell 110, of the second stacked cell 120.

In some embodiments, the first current collector A110 may be an aluminum foil, and a thickness of the first current collector A110 is greater than or equal to 10 µm.

In a case of the same battery housing volume, the more the positive electrode plates of the battery cell 100, the higher a charge handling capacity. Therefore, in the case of the same battery housing volume, the first current collector A110 of the first electrode plate A100, close to the second stacked cell 120, of the first stacked cell 110 is configured to be opposite to the first current collector A110 of the first electrode plate A100, close to the first stacked cell 110, of the second stacked cell 120, so that the charge handling capacity of the battery cell 100 is relatively high. Therefore, the charge handling capacity of the battery cell 100 is increased by setting the first stacked cell 110 and the second stacked cell 120 provided by the embodiments of the present application.

In the battery cell 100 provided by the embodiments of the present application, the first current collector A110, close to the second stacked cell 120, of the first stacked cell 110 and the first current collector A110, close to the first stacked cell 110, of the second stacked cell 120 are bonded into a whole by any one of a hot melt adhesive, a polypropylene adhesive and a double-sided adhesive, so that a manufacturing process is simple and a cost is low.

FIG. 3 is a schematic structural diagram of a first electrode plate, far away from a second stacked cell, of a first stacked cell provided by an exemplary embodiment of the present application. As shown in FIG. 3, the first electrode plate A100, far away from the second stacked cell 120, of the first stacked cell 110 includes a first current collector A110 and a first polar active layer A120 coated on a surface, close to the second stacked cell 120, of the first current collector A110.

It should be understood that the first electrode plate A100, far away from the second stacked cell 120, of the first stacked cell 110 refers to a first electrode plate, farthest away from the second stacked cell 120, of the first stacked cell 110, i.e., a first electrode plate at the top.

Specifically, the first polar active layer A120 is a positive electrode active layer, including ternary lithium, lithium iron phosphate, lithium cobaltate, lithium manganate and the like, and a thickness of the first polar active layer A120 is greater than or equal to 30 µm.

As shown in FIG. 3, the battery cell 100 provided by the embodiments of the present application further includes: a first separator 130 bonded to the first polar active layer A120 of the first electrode plate A100, far away from the second stacked cell 120, of the first stacked cell 110.

Specifically, the first polar active layer A120 and the first separator 130 are bonded into a whole by a hot pressing process.

In a non-charging and non-discharging state, a function of a separator is to prevent a short circuit; and in a charging and discharging state, a charged ion (such as a lithium ion) is subjected to an ion transfer via a pore of the separator. Exemplarily, in a charging state, the lithium ion is transferred from a positive electrode to a negative electrode; and in a discharging state, the lithium ion is transferred from a negative electrode to a positive electrode.

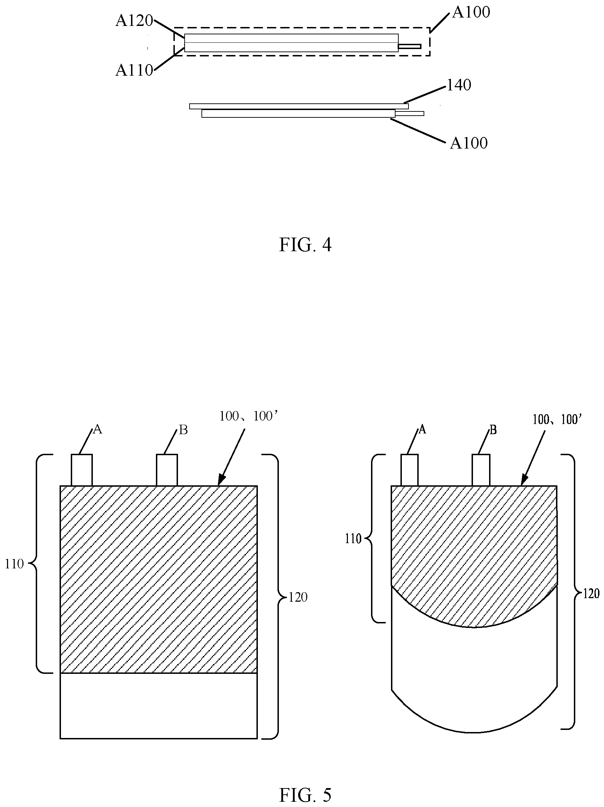

FIG. 4 is a schematic structural diagram of a first electrode plate, far away from a first stacked cell, of a second stacked cell provided by an exemplary embodiment of the present application. As shown in FIG. 4, in the battery cell 100 provided by the embodiments of the present application, the first electrode plate A100, far away from the first stacked cell 110, of the second stacked cell 120 includes a first current collector A110 and a first polar active layer A120 coated on a surface, close to the first stacked cell 110, of the first current collector A110.

It should be understood that the first electrode plate A100, far away from the first stacked cell 110, of the second stacked cell 120 refers to a first electrode plate, farthest away from the first stacked cell 110, of the second stacked cell 120, i.e., a first electrode plate at the bottom.

The battery cell 100 provided by the embodiments of the present application further includes: a second separator 140 bonded to the first polar active layer A120 of the first electrode plate A100, far away from the first stacked cell 110, of the second stacked cell 120.

As a principle mentioned in the embodiments shown in FIG. 2, setting the first stacked cell 110 and the second stacked cell 120 provided by the embodiments shown in FIGS. 3 and 4 further increase the charge handling capacity of the battery cell 100.

It should be noted that structures of the first separator 130 and the second separator 140 are the same, and a difference lies in that positions of the first separator 130 and the second separator 140 are different. In addition, the separator and the active layer mentioned in the present application are bonded into a whole by the hot pressing process.

In some embodiments, the first separator 130 and the second separator 140 both include a glued separator or a ceramic coated separator, and a thickness of the separator is greater than or equal to 5 µm.

FIG. 5 is a schematic structural diagram of a battery cell provided by another exemplary embodiment of the present application. As shown in FIG. 5, on the plane parallel to the first electrode plates A100, a projection of at least one side of the first stacked cell 110 coincides with a projection of at least one side of the second stacked cell 120, to ensure that an edge of the first stacked cell 110 is flush with an edge of the second stacked cell 120, and to prevent the first stacked cell 110 and the second stacked cell 120 from shaking, thereby avoiding a breakage of a housing caused by a deviation between the first stacked cell 110 and the second stacked cell 120.

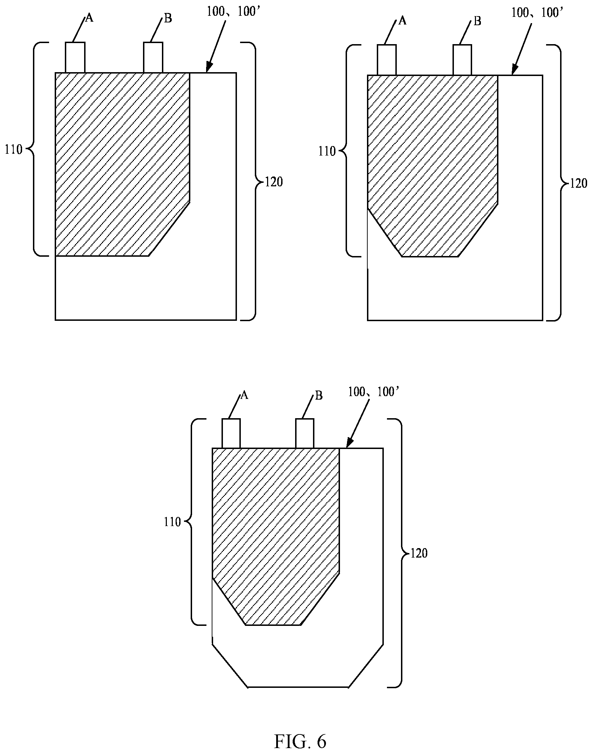

FIG. 6 is a schematic structural diagram of a battery cell provided by another exemplary embodiment of the present application. As shown in FIG. 6, in the embodiments of the present application, other three kinds of planar shapes of the first stacked cell 110 and the second stacked cell 120 are provided, i.e., shapes of projections, on the plane parallel to the first electrode plates A100, of the first stacked cell 110 and the second stacked cell 120. The shapes of the projections, on the plane parallel to the first electrode plates A100, of the first stacked cell 110 and the second stacked cell 120 are not further limited in the embodiments of the present application, as long as the first stacked cell 110 and the second stacked cell 120 can be flexibly adapted to battery compartment structures of different shapes.

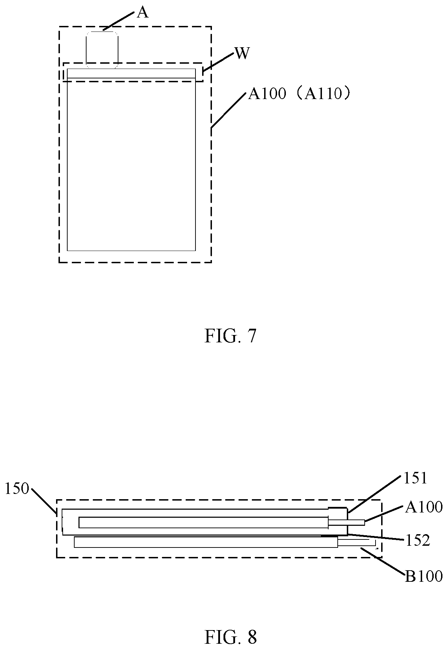

FIG. 7 is a schematic structural diagram of an insulating layer provided by an exemplary embodiment of the present application. As shown in FIG. 7, the first electrode plate A100 includes a first current collector A110, a surface, at an end close to the first tab A, of the first current collector A110 includes an uncoated region W, and the uncoated region W is provided with an insulating layer.

Because the electrode plates are formed by slicing, there are burrs on cut sections of a perimeter of the positive electrode plates and the negative electrode plates, especially at positions of positive electrode tabs on the positive electrode plates, and after the burrs pierce the separator and come into contact with the negative electrode plates, there is a risk of a severe short circuit failure. Therefore, the uncoated region W of the first current collector A110 is provided with the insulating layer, a width of the insulating layer is greater than or equal to 3 mm, a length of the insulating layer may be equal to a length of the first current collector A110, a thickness of the insulating layer is greater than or equal to 10 µm, and a material of the insulating layer may be an insulating material such as ceramic, so that the insulating layer is used to prevent a short circuit.

FIG. 8 is a schematic structural diagram of a composite cell provided by an exemplary embodiment of the present application. As shown in FIG. 8, the battery cell 100 provided by the embodiments of the present application further includes: a plurality of composite cells 150, and the composite cell 150 includes a third separator 151, the first electrode plate A100, a fourth separator 152 and the second electrode plate B100 that are stacked in sequence and bonded to each other. In some embodiments, a portion, extending beyond the first electrode plate A100, of the third separator 151 is bonded to a portion, extending beyond the first electrode plate A100, of the fourth separator 152. The third separator 151 and the fourth separator 152 enclose the first electrode plate A100, so that the first electrode plate A100 is not in direct contact with the second electrode plate B100, to prevent the first electrode plate A100 and the second electrode plate B100 from being short-circuited in the non-charging and non-discharging state.

In some embodiments, the second electrode plate B100 includes a second current collector and a second polar active layer coated on a surface of the second current collector. The second current collector B 110 may be a copper foil, and a thickness of the second current collector B110 is greater than or equal to 1 µm. The second polar active layer B120 is a negative electrode active layer, including graphite and the like, and a thickness of the second polar active layer B120 is greater than or equal to 20 µm.

A battery cell provided by some other embodiments of the present application is described below with reference to FIGS. 3 to 8 and FIGS. 10a to 10c.

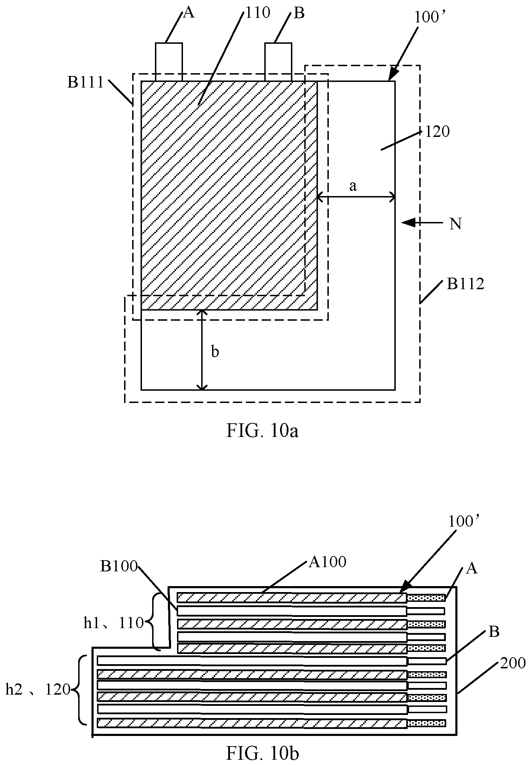

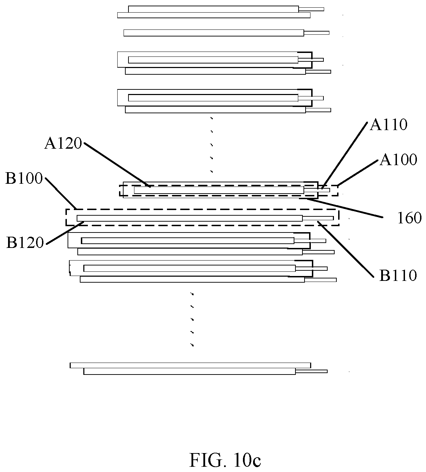

FIG. 10a is a schematic structural diagram of a battery cell provided by an exemplary embodiment of the present application. FIG. 10b is a schematic structural diagram of the battery cell shown in FIG. 10a in the N direction. FIG. 10c is a schematic structural diagram of a battery cell provided by another exemplary embodiment of the present application. As shown in FIGS. 10a, 10b and 10c, a battery cell 100' provided by the embodiments of the present application includes: a first stacked cell 110 and a second stacked cell 120 that are stacked, and a housing 200 in which the first stacked cell 110 and the second stacked cell 120 are enclosed. The first stacked cell 110 and the second stacked cell 120 both include a plurality of first electrode plates A100 and a plurality of second electrode plates B100 that are alternately stacked, and on a plane parallel to the first electrode plates A100, a projection of the first stacked cell 110 is within a range of a projection of the second stacked cell 120; the second electrode plate B100, close to the first stacked cell 110, of the second stacked cell 120 includes a second current collector B110 and a second polar active layer B120 coated on a surface of the second current collector B110, and the second current collector B110 includes a first portion B111, opposite to the first electrode plate A100, close to the second stacked cell 120, of the first stacked cell 110, and a second portion B112 connected to the first portion B111; the second polar active layer B120 is coated on a surface of the first portion B111; and a protective layer is provided on a surface, close to the first stacked cell 110, of the second portion B112.

In some embodiments, as shown in FIGS. 10a and 10b, a difference between a thickness h1 of the first stacked cell 110 and a thickness h2 of the second stacked cell 120 is greater than or equal to 0.3 mm, a length difference, denoted as a, between the first stacked cell 110 and the second stacked cell 120 is greater than or equal to 0 mm, and a width difference, denoted as b, between the first stacked cell 110 and the second stacked cell 120 is greater than or equal to 0 mm, but the length difference, denoted as a, and the width difference, denoted as b, cannot be both equal to 0 mm.

It should be noted that the second polar active layer B120 coated on the surface of the first portion B111 is configured to be adjacent to the first electrode plate A100, close to the second stacked cell 120, of the first stacked cell 110, so that charges of the first stacked cell 110 and the second stacked cell 120 move toward each other, to form a current. In addition, the surface, close to the first stacked cell 110, of the second portion B112 is provided with the protective layer to prevent the second portion B112 from being electrically connected to the housing 200, thereby avoiding a short circuit. Specifically, the first portion B111 is an overlapping portion between the first electrode plate A100, close to the second stacked cell 120, of the first stacked cell 110 and the second polar active layer B120, the second portion B112 is a non-overlapping portion between the first electrode plate A100, close to the second stacked cell 120, of the first stacked cell 110 and the second polar active layer B120, and the protective layer is provided on the surface, close to the first stacked cell 110, of the non-overlapping portion.

In the battery cell 100' provided by the embodiments of the present application, sizes of the first stacked cell 110 and the second stacked cell 120 are different, so that the first stacked cell 110 and the second stacked cell 120 can be flexibly adapted to battery compartment structures of difference sizes, a manufacturing process is simple and a mass production is easy to implement. In addition, disposal of the protective layer on the second portion B112 prevents the second portion B112 and the housing 200 from being short-circuited. In other words, a non-overlapping region between the first stacked cell 110 and the second stacked cell 120 is provided with the protective layer, to prevent the second electrode plate B100, close to the first stacked cell 110, of the second stacked cell 120 from being electrically connected to the housing 200, thereby avoiding a short circuit.

The battery cell 100' is provided by the present application, and the battery cell 100' includes: the first stacked cell 110 and the second stacked cell 120 that are stacked, and the housing 200 in which the first stacked cell 110 and the second stacked cell 120 are enclosed. The first stacked cell 110 and the second stacked cell 120 both include the plurality of first electrode plates A100 and the plurality of second electrode plates B100 that are alternately stacked, and on the plane parallel to the first electrode plates A100, the projection of the first stacked cell 110 is within the range of the projection of the second stacked cell 120, i.e., the first stacked cell 110 and the second stacked cell 120 are of different sizes, so that the first stacked cell 110 and the second stacked cell 120 can be flexibly adapted to the battery compartment structures of difference sizes, the manufacturing process is simple and the mass production is easy to implement. In addition, the second electrode plate B100, close to the first stacked cell 110, of the second stacked cell 120 includes the second current collector B110 and the second polar active layer B120 coated on the surface of the second current collector B110, and the second current collector B110 includes the first portion B 111, opposite to the first electrode plate A100, close to the second stacked cell 120, of the first stacked cell 110, and the second portion B112 connected to the first portion B111; the second polar active layer B120 is coated on the surface of the first portion B111; and the protective layer is provided on the surface, close to the first stacked cell 110, of the second portion B112, to prevent the second portion B112 from being electrically connected to the housing 200, thereby avoiding a short circuit.

In some embodiments, the protective layer includes a blue adhesive and/or a green adhesive. The type of the adhesive paper is not limited in the embodiments of the present application, so long as a short circuit between the second portion B112 and the housing 200 can be prevented.

In addition, a shape of the second polar active layer B120 coated on the first portion B111 is determined by a shape of the first electrode plate A100, close to the second stacked cell 120, of the first stacked cell 110, and the shapes of the above two may be set according to a shape of an actual battery compartment.

In some embodiments, the second polar active layer B120 is also coated on a surface, other than the surface where the protective layer is located, of the second portion B112. A surface, close to the first stacked cell 110, of the second current collector B110 may be fully coated with the second polar active layer B120, i.e., a surface, close to the first stacked cell 110, of the first portion B111 and a surface, close to the first stacked cell 110, of the second portion B112 are coated with the second polar active layer B120, or only the surface, close to the first stacked cell 110, of the first portion B111 is coated with the second polar active layer B120. As for any one of the above-mentioned coating manners, the protective layer is provided on the surface, close to the first stacked cell 110, of the second portion B112.

As shown in FIG. 10c, in the battery cell 100' provided by the embodiments of the present application, the first electrode plate A100 includes a first current collector A110 and a first polar active layer A120 coated on a surface of the first current collector A110, and the first polar active layer A120 of the first electrode plate A100, close to the second stacked cell 120, of the first stacked cell 110 is configured to be opposite to the second polar active layer B120 of the second electrode plate B100, close to the first stacked cell 110, of the second stacked cell 120.

In some embodiments, to be opposite to refers to that the first polar active layer A120 of the first electrode plate A100, close to the second stacked cell 120, of the first stacked cell 110 is configured to be adj acent to the second polar active layer B120 of the second electrode plate B100, close to the first stacked cell 110, of the second stacked cell 120.

In some embodiments, the first current collector A110 may be an aluminum foil, and a thickness of the first current collector A110 is greater than or equal to 10 µm. The second polar active layer B120 is a negative electrode active layer, including graphite and the like, and a thickness of the second polar active layer B120 is greater than or equal to 20 µm.

It should be noted that all the first polar active layer A120 has its matched second polar active layer B120, to prevent lithium precipitation from occurring, and a part of the second polar active layer B120 may have no matched first polar active layer A120, i.e., on the plane parallel to the first electrode plates A100, the projection of the first stacked cell 110 is within the range of the projection of the second stacked cell 120. The electrode plate, close to the first stacked cell 110, of the second stacked cell 120 is configured to be the second electrode plate B100, and the electrode plate, close to the second stacked cell 120, of the first stacked cell 110 is configured to be the first electrode plate A100.

In some embodiments, the first electrode plates A100 are positive electrode plates; and the second electrode plates B100 are negative electrode plates.

In some embodiments, the first stacked cell 110 and the second stacked cell 120 both include a plurality of first tabs A and a plurality of second tabs B; on the plane parallel to the first electrode plates A100, there is an overlapping region between a projection of the plurality of first tabs A of the first stacked cell 110 and a projection of the plurality of first tabs A of the second stacked cell 120, and/or, on the plane parallel to the first electrode plates A100, there is also an overlapping region between a projection of the plurality of second tabs B of the first stacked cell 110 and a projection of the plurality of second tabs B of the second stacked cell 120. The first tabs A refer to positive electrode tabs, and the second tabs B refer to negative electrode tabs. The positive electrode plates correspond to the positive electrode tabs, and the negative electrode plates correspond to the negative electrode tabs.

The battery cell 100' provided by the embodiments of the present application further includes: a fifth separator 160 bonded to the first electrode plate A100, close to the second stacked cell 120, of the first stacked cell 110, and the fifth separator 160 and the second polar active layer B120, close to the first stacked cell 110, of the second stacked cell 120 are bonded into a whole.

Specifically, the second polar active layer B120 and the fifth separator 160 are bonded into a whole by a hot pressing process.

In a non-charging and non-discharging state, a function of a separator is to prevent a short circuit; and in a charging and discharging state, a charged ion (such as a lithium ion) is subjected to an ion transfer via a pore of the separator. Exemplarily, in a charging state, the lithium ion is transferred from the positive electrode to the negative electrode; and in a discharging state, the lithium ion is transferred from the negative electrode to the positive electrode.

FIG. 3 is a schematic structural diagram of a first electrode plate, far away from a second stacked cell, of a first stacked cell provided by an exemplary embodiment of the present application. As shown in FIG. 3, the first electrode plate A100, far away from the second stacked cell 120, of the first stacked cell 110 includes a first current collector A110 and a first polar active layer A120 coated on a surface, close to the second stacked cell 120, of the first current collector A110.

Specifically, the first polar active layer A120 is a positive electrode active layer, including ternary lithium, lithium iron phosphate, lithium cobaltate, lithium manganate and the like, and a thickness of the first polar active layer A120 is greater than or equal to 30 µm.

It should be noted that in a case of the same battery housing volume, the more the positive electrode plates of the battery cell 100', the higher a charge handling capacity. Therefore, in the case of the same battery housing volume, the electrode plate, far away from the second stacked cell 120, of the first stacked cell 110 is configured to be the first electrode plate A100, so that an amount of the first electrode plates A100 in the battery cell 100' is increased, thereby increasing the charge handling capacity of the battery cell 100'. Therefore, the charge handling capacity of the battery cell 100' is increased by setting the first stacked cell 110 provided by the embodiments of the present application.

The battery cell 100' provided by the embodiments of the present application further includes: a first separator 130 bonded to the first polar active layer A120 of the first electrode plate A100, far away from the second stacked cell 120, of the first stacked cell 110. The fifth separator 160 and the first separator 130 have the same structure, and a difference lies in that positions of the fifth separator 160 and the first separator 130 are different. In addition, the separator and the active layer mentioned in the present application are bonded into a whole by the hot pressing process.

FIG. 4 is a schematic structural diagram of a first electrode plate, far away from a first stacked cell, of a second stacked cell provided by an exemplary embodiment of the present application. As shown in FIG. 4, in the battery cell 100' provided by the embodiments of the present application, the first electrode plate A100, far away from the first stacked cell 110, of the second stacked cell 120 includes a first current collector A110 and a first polar active layer A120 coated on a surface, close to the first stacked cell 110, of the first current collector A110. The battery cell 100' provided by the embodiments of the present application further includes: a second separator 140 bonded to the first polar active layer A120 of the first electrode plate A100, far away from the first stacked cell 110, of the second stacked cell 120.

As a principle mentioned in the embodiments shown in FIG. 3, in the case of the same battery housing volume, the electrode plate, far away from the first stacked cell 110, of the second stacked cell 120 is configured to be the first electrode plate A100, so that an amount of the first electrode plates A100 in the battery cell 100' is increased, thereby increasing the charge handling capacity of the battery cell 100'.

FIG. 5 is a schematic structural diagram of a battery cell provided by another exemplary embodiment of the present application. As shown in FIG. 5, on the plane parallel to the first electrode plates A100, a projection of at least one side of the first stacked cell 110 coincides with a projection of at least one side of the second stacked cell 120, to ensure that an edge of the first stacked cell 110 is flush with an edge of the second stacked cell 120, and to prevent the first stacked cell 110 and the second stacked cell 120 from shaking, thereby avoiding a breakage of a housing 200 caused by a deviation between the first stacked cell 110 and the second stacked cell 120.

FIG. 6 is a schematic structural diagram of a battery cell provided by another exemplary embodiment of the present application. As shown in FIG. 6, in the embodiments of the present application, other three kinds of planar shapes of the first stacked cell 110 and the second stacked cell 120 are provided, i.e., shapes of projections, on the plane parallel to the first electrode plates A100, of the first stacked cell 110 and the second stacked cell 120. The shapes of the projections, on the plane parallel to the first electrode plates A100, of the first stacked cell 110 and the second stacked cell 120 are not further limited in the embodiments of the present application, as long as the first stacked cell 110 and the second stacked cell 120 can be flexibly adapted to battery compartment structures of different shapes.

FIG. 7 is a schematic structural diagram of an insulating layer provided by an exemplary embodiment of the present application. As shown in FIG. 7, the first electrode plate A100 includes a first current collector A100, and an insulating layer W is provided in a region at an end, close to of the first tab A, of the first current collector A 100.

Because the electrode plates are formed by slicing, there are burrs on cut sections of a perimeter of the positive electrode plates and the negative electrode plates, especially at positions of positive electrode tabs on the positive electrode plates, and after the burrs pierce the separator and come into contact with the negative electrode plates, there is a risk of a severe short circuit failure. Therefore, the region at the end, close to the first tab A, of the first current collector A110 is provided with the insulating layer W, a width of the insulating layer W is greater than or equal to 3 mm, a length of the insulating layer W may be equal to a length of the first current collector A110, a thickness of the insulating layer W is greater than or equal to 10 µm, and a material of the insulating layer W may be an insulating material such as ceramic, so that the insulating layer W is used to prevent a short circuit.

FIG. 8 is a schematic structural diagram of a composite cell provided by an exemplary embodiment of the present application. As shown in FIG. 8, the battery cell 100' provided by the embodiments of the present application further includes: a plurality of composite cells 150, and the composite cell 150 includes a third separator 151, the first electrode plate A100, a fourth separator 152 and the second electrode plate B100 that are stacked in sequence and bonded to each other. A portion, extending beyond the first electrode plate A100, of the third separator 151 is bonded to a portion, extending beyond the first electrode plate A100, of the fourth separator 152. The third separator 151 and the fourth separator 152 enclose the first electrode plate A100, so that the first electrode plate A100 is not in direct contact with the second electrode plate B100, to prevent the first electrode plate A100 and the second electrode plate B100 from being short-circuited in the non-charging and non-discharging state.

Specifically, the fifth separator 160, the first separator 130, the second separator 140, the third separator 151 and the fourth separator 152 mentioned throughout the text all include a glue separator or a ceramic coated separator, and the thickness of the above separator is greater than or equal to 5 µm.

In some embodiments, the second electrode plate B100 includes a second current collector B110 and a second polar active layer B120 coated on a surface of the second current collector B110. The second current collector B110 may be a copper foil, and a thickness of the second current collector B110 is greater than or equal to 1 µm. The second polar active layer B120 is a negative electrode active layer, including graphite and the like, and a thickness of the second polar active layer B120 is greater than or equal to 20 µm.

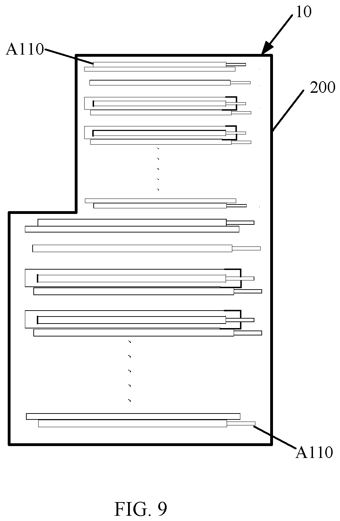

FIG. 9 is a schematic structural diagram of a battery provided by an exemplary embodiment of the present application. As shown in FIG. 9, the embodiments of the present application provide a battery 10, and the battery 10 includes the battery cell 100 according to any one of the above-mentioned embodiments and a housing 200.

In some embodiments, the first electrode plate A100, far away from the second stacked cell 120, of the first stacked cell 110 includes a first current collector A110, and the first current collector A110 is configured to be opposite to the housing 200, and/or the first electrode plate A100, far away from the first stacked cell 110, of the second stacked cell 120 includes a first current collector A110, and the first current collector A110 is configured to be opposite to the housing 200. Specifically, the first current collector A110 being configured to be opposite to the housing 200 refers to that the first current collector A110 is configured to be adj acent to the housing 200.

The battery 10 mentioned in the embodiments of the present application may be flexibly adapted to different stepped battery compartment structures, which is beneficial to the development of smart products in aspects of portability and miniaturization. The battery 10 mentioned in the present application may be a lithium battery.

The basic principles of the present application are described above with reference to the specific embodiments, but it should be noted that the advantages, superiorities, effects and the like mentioned in the present application are only examples but not limitations, and it should not be assumed that these advantages, superiorities, effects and the like are essential for each embodiment of the present application. In addition, the above-disclosed specific details are only for the purposes of illustration and for ease of understanding, but not limitation, and the above-mentioned details are not intended to limit the present application to be implemented by using the above-mentioned specific details.

The block diagrams of the devices, apparatuses, equipment and systems involved in the present application are only illustrative examples and are not intended to require or imply that connections, arrangements and configurations must be made in the manner shown in the block diagrams. As will be appreciated by a person skilled in the art, these devices, apparatuses, equipment and systems may be connected, arranged and configured in any manner. The terms such as "including", "containing", "having", and the like are open-ended terms that mean "including but not limited to", which may be interchanged with each other. The terms "or" and "and" used herein refer to the term "and/or", which may be interchanged with each other, unless the context clearly dictates otherwise. The term "such as" used herein refers to the phrase "such as, but not limited to", which may be interchanged with each other.

It should also be noted that, in the method, the apparatus and the equipment of the present application, the components or the steps may be decomposed and/or recombined. Such decomposition and/or recombination should be considered as equivalent solutions of the present application.

The above descriptions of the disclosed aspects are provided to enable any person skilled in the art to make or use the present application. Various modifications to these aspects will be readily apparent to a person skilled in the art, and the generic principles defined herein may be applied to other aspects without departing from the scope of the present application. Thus, the present application is not intended to be limited to the aspects shown herein, but is to be accorded the broadest scope consistent with the principles and novel features disclosed herein.

The above descriptions have been presented for purposes of illustration and description. Moreover, such descriptions are not intended to limit the embodiments of the present application to the forms disclosed herein. While various example aspects and embodiments have been discussed above, a person skilled in the art will recognize certain variations, modifications, changes, additions, and sub-combinations thereof.

## Claims

1. A battery cell, comprising:
a first stacked cell and a second stacked cell that are stacked, wherein the first stacked cell and the second stacked cell both comprise a plurality of first electrode plates and a plurality of second electrode plates that are alternately stacked, and on a plane parallel to the plurality of first electrode plates, a projection of the first stacked cell is within a range of a projection of the second stacked cell.

2. The battery cell according to claim 1, wherein the first stacked cell and the second stacked cell both comprise a plurality of first tabs and a plurality of second tabs,
wherein on the plane parallel to the plurality of first electrode plates, there is an overlapping region between a projection of the plurality of first tabs of the first stacked cell and a projection of the plurality of first tabs of the second stacked cell, and/or
on the plane parallel to the plurality of first electrode plates, there is also an overlapping region between a projection of the plurality of second tabs of the first stacked cell and a projection of the plurality of second tabs of the second stacked cell.

3. The battery cell according to claim 1 or 2, further comprising: a housing in which the first stacked cell and the second stacked cell are enclosed.

4. The battery cell according to any one of claims 1 to 3, wherein each second electrode plate of the plurality of second electrode plates comprises a second current collector and a second polar active layer coated on a surface of the second current collector;
the second current collector of the second electrode plate, close to the first stacked cell, of the second stacked cell comprises a first portion, opposite to the first electrode plate, close to the second stacked cell, of the first stacked cell, and a second portion connected to the first portion;
the second polar active layer comprises a portion formed on the first portion; and
a protective layer is provided on a surface, close to the first stacked cell, of the second portion.

5. The battery cell according to claim 4, wherein the protective layer comprises a blue adhesive and/or a green adhesive.

6. The battery cell according to claim 4, wherein the second polar active layer further comprises a portion between the second portion and the protective layer.

7. The battery cell according to any one of claims 1 to 6, wherein each first electrode plate of the plurality of first electrode plates comprises a first current collector and a first polar active layer coated on a surface of the first current collector, and the first current collector of the first electrode plate, close to the second stacked cell, of the first stacked cell is configured to be opposite to the first current collector of the first electrode plate, close to the first stacked cell, of the second stacked cell.

8. The battery cell according to claim 7, wherein the first current collector of the first electrode plate, close to the second stacked cell, of the first stacked cell and the first current collector of the first electrode plate, close to the first stacked cell, of the second stacked cell are bonded into a whole by any one of a hot melt adhesive, a polypropylene adhesive and a double-sided adhesive.

9. The battery cell according to any one of claims 1 to 6, wherein each first electrode plate of the plurality of first electrode plates comprises a first current collector and a first polar active layer coated on a surface of the first current collector, each second electrode plate of the plurality of second electrode plates comprises a second current collector and a second polar active layer coated on a surface of the second current collector, and the first polar active layer of the first electrode plate, close to the second stacked cell, of the first stacked cell is configured to be opposite to the second polar active layer of the second electrode plate, close to the first stacked cell, of the second stacked cell.

10. The battery cell according to any one of claims 1 to 9, further comprising: a fifth separator bonded to the first electrode plate, close to the second stacked cell, of the first stacked cell, wherein the fifth separator and a second polar active layer, close to the first stacked cell, of the second stacked cell are bonded into a whole.

11. The battery cell according to any one of claims 1 to 10, wherein the first electrode plate, far away from the second stacked cell, of the first stacked cell comprises a first current collector and a first polar active layer coated on a surface, close to the second stacked cell, of the first current collector.

12. The battery cell according to claim 11, further comprising: a first separator bonded to the first polar active layer coated on the surface, close to the second stacked cell, of the first current collector.

13. The battery cell according to any one of claims 1 to 12, wherein the first electrode plate, far away from the first stacked cell, of the second stacked cell comprises a first current collector and a first polar active layer coated on a surface, close to the first stacked cell, of the first current collector.

14. The battery cell according to claim 13, further comprising: a second separator bonded to the first polar active layer coated on the surface, close to the first stacked cell, of the first current collector.

15. The battery cell according to any one of claims 1 to 14, wherein on the plane parallel to the plurality of first electrode plates, a projection of at least one side of the first stacked cell coincides with a projection of at least one side of the second stacked cell.

16. The battery cell according to any one of claims 1 to 15, wherein the first stacked cell and the second stacked cell both comprise a plurality of first tabs and a plurality of second tabs, each first electrode plate of the plurality of first electrode plates comprises a first current collector, and an insulating layer is provided in a region at an end, close to a corresponding first tab, of the first current collector.

17. The battery cell according to any one of claims 1 to 16, further comprising: a plurality of composite cells, wherein each composite cell of the plurality of composite cells comprises a third separator, the first electrode plate, a fourth separator and the second electrode plate that are stacked in sequence.

18. The battery cell according to claim 17, wherein a portion, extending beyond the first electrode plate, of the third separator is bonded to a portion, extending beyond the first electrode plate, of the fourth separator.

19. The battery cell according to any one of claims 1 to 18, wherein the first electrode plates are positive electrode plates; and
the second electrode plates are negative electrode plates.

20. A battery, comprising the battery cell according to any one of claims 1 to 19 and a housing.

21. The battery according to claim 20, wherein the first electrode plate, far away from the second stacked cell, of the first stacked cell comprises a first current collector, and the first current collector is configured to be opposite to the housing, and/or
the first electrode plate, far away from the first stacked cell, of the second stacked cell comprises a first current collector, and the first current collector is configured to be opposite to the housing.
